# FASCICULE DE BREVET EUROPEEN

(11) **EP 2 189 676 B1**
(45) Date de publication et mention de la délivrance du brevet: **15.05.2013**
(21) Numéro de dépôt: 09290803.7
(22) Date de dépôt: 20.10.2009
(51) Int. Cl.: F16D 65/00

(54) **Barrette de roue et roue spécialement adaptée**
Keil für ein Rad sowie hierfür ausgebildetes Rad
Drive key for wheel and wheel adapted therefor

(30) Priorité: 04.11.2008 FR 0806126
(43) Date de publication de la demande: 26.05.2010
(73) Titulaire: Messier-Bugatti-Dowty, 78140 Velizy Villacoublay (FR)
(72) Inventeur: Baldassara, Patrick, 77220 Liverdy (FR)
(74) Mandataire: Parzy, Benjamin Alain

(56) Documents cités:
- DE-B- 1 266 067
- GB-A- 1 302 216
- US-A- 3 237 731
- US-A1- 2005 264 090

## Description

L'invention est relative à des clés ou barrettes qui équipent les roues d'aéronef pour entraîner en rotation le ou les disques de frein qui tournent avec la roue, et également à une roue spécialement adaptée pour recevoir des telles barrettes.

### ARRIERE-PLAN DE L'INVENTION

On appellera ici roue l'ensemble constitué du moyeu, du voile et de la jante. Dans les roues d'aéronefs destinées à coopérer avec un frein, un volume interne s'étendant sous la jante et délimité par le voile s'étend pour recevoir les disques du frein. Ceux des disques qui tournent avec la roue, ou disques rotors, comportent en général des encoches périphériques dans lesquelles s'étendent des barrettes solidaires de la roue qui entraînent les disques par l'effet des liaisons à obstacle ainsi formées. Les barrettes s'étendent dans un plan contenant l'axe de la roue, sous la jante à proximité de la face interne de celle-ci.

On connaît plusieurs types de barrettes. Dans certaines roues, des tenons venus de matière avec la roue s'étendent en saillie sous la jante. Les tenons reçoivent des barrettes ayant une section courante en U qui viennent chevaucher les tenons. Cette disposition est simple à mettre en oeuvre. Cependant, la présence des tenons complique l'usinage de la face interne de la jante, qui ne peut plus être tournée.

Dans d'autres roues, la barrette comporte un corps terminé à une première extrémité par un doigt qui pénètre dans un orifice du voile s'étendant parallèlement à l'axe de rotation de la roue et réalisé, et à son autre extrémité par un orifice adapté à recevoir une vis qui s'étend selon une direction radiale au travers d'une patte ou d'une jupe venue de matière avec la jante et saillant de celle-ci vers l'extérieur, et donc augmentant l'encombrement de la roue. Le boulon de fixation de la barrette contribue à reprendre les efforts de freinage et doit donc être dimensionné en conséquence. En outre, les extrémités des barrettes qui portent ces boulons sont exposées comme les documents GB1302216 A, US3237731 A et DE1266067 B l'indiquent.

### OBJET DE L'INVENTION

L'invention a pour objet une barrette de roue moins lourde, et permettant une diminution de l'encombrement de la roue qui reçoit cette barrette.

### BREVE DESCRIPTION DE L'INVENTION

En vue de la réalisation de ce but, on propose une barrette présentant un corps oblong prolongé de part et d'autre par deux embouts s'étendant parallèlement au corps et parallèlement entre eux, mais en étant décalés l'un par rapport à l'autre. Par ailleurs, les embouts sont conformés pour pénétrer à glissement dans deux orifices parallèles décalés.

Ainsi, un premier embout peut être introduit dans un premier orifice conforme pratiqué dans le voile de la roue, comme pour les barrettes connues. Puis, par une rotation de la barrette autour de cet embout, le deuxième embout est ramené en regard d'un deuxième orifice parallèle au premier mais décalé du même décalage qui celui affectant les extrémités, le deuxième orifice étant pratiqué dans une partie de la jante en saillie non plus vers l'extérieur de la roue, mais en saillie radiale vers l'axe de rotation de la roue. L'encombrement de la roue en est diminué d'autant. Il suffit alors de faire reculer la barrette de sorte que le deuxième embout pénètre dans le deuxième orifice. La barrette est ainsi mise en place sur la roue et il ne reste plus qu'à la fixer, par exemple au moyen d'un écrou rapporté sur l'extrémité filetée du deuxième embout, ou, si le deuxième embout est prévu creux, au moyen d'un boulon logé dans le deuxième embout. Ainsi, le deuxième embout participe pleinement à la reprise de l'effort de freinage, de sorte que l'écrou ou le boulon ne sert qu'à retenir la barrette en position, et peut donc être prévu beaucoup moins imposant, ce qui conduit à une diminution de masse.

### BREVE DESCRIPTION DES FIGURES

L'invention sera mieux comprise à la lumière des figures des dessins annexés, illustrant de façon non limitative un mode particulier de réalisation de l'invention, et parmi lesquelles :
- la figure 1 est une vue en perspective d'une barrette conforme à l'invention ;
- les figures 2 à 5 sont des vues en coupe partielle d'une jante de roue selon l'invention, illustrant les différentes étapes de l'installation de la barrette de la figure 1 sur ladite roue.

### DESCRIPTION DETAILLEE DES FIGURES

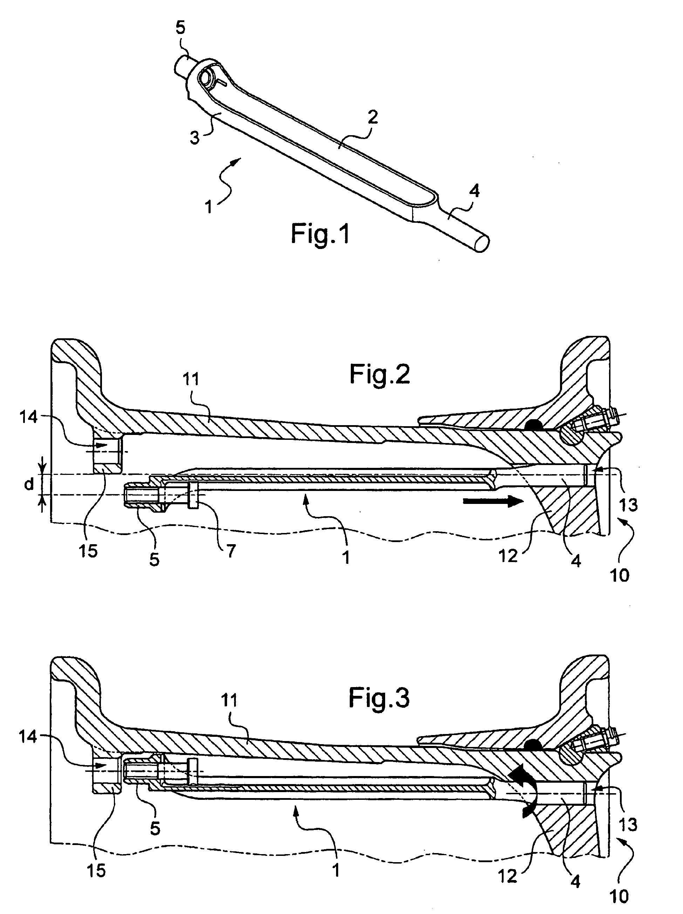

En référence à la figure 1, la barrette 1 de l'invention comporte un corps 2 oblong, comportant deux flancs parallèles 3 destinés à coopérer avec les disques de freins à entraîner (un seul des flancs 3 est ici visible). La barrette 1 comporte à l'une de ses extrémités un premier embout 4 cylindrique circulaire, s'étendant parallèlement à un axe longitudinal du corps 2, ici dans le prolongement de ce dernier. La barrette 1 comporte, à son extrémité opposée, un deuxième embout 5, ici également cylindrique circulaire, qui s'étend parallèlement au premier embout 4, mais en étant décalé par rapport à celui-ci. On constate ainsi que le deuxième embout 5 ne s'étend pas dans le prolongement du corps oblong 2 mais est décalé par rapport à celui-ci, et donc également par rapport au premier embout 4. Ici, le deuxième embout 5 est creux, pour recevoir une vis.

Le montage de la barrette 1 est maintenant expliqué en référence aux figures 2 à 4. La roue 10 qui reçoit la barrette 1 de l'invention comporte, comme les roues connues, une jante 11 destinée à recevoir un pneumatique, et un voile 12 pour la liaison de la jante à un moyeu non représenté ici. Le voile 12 comporte un premier orifice cylindrique circulaire 13 adapté à recevoir le premier embout 4 de la barrette 1. Un deuxième orifice 14, destiné à recevoir le deuxième embout 5 de la barrette 1 est ménagé dans une portion 15 de la jante 11 qui s'étend en saillie radiale de la face interne de celle-ci. Le deuxième orifice 14 est bien sûr parallèle au premier orifice 13, en étant décalé par rapport à ce dernier du même décalage que le décalage entre les embouts 4,5 de la barrette 1. On notera que cette portion 15, ici prenant la forme d'une patte, ne dépasse pas de l'extrémité de la jante 11 et de son bourrelet terminal, ce qui permet une réduction sensible de l'encombrement de la roue.

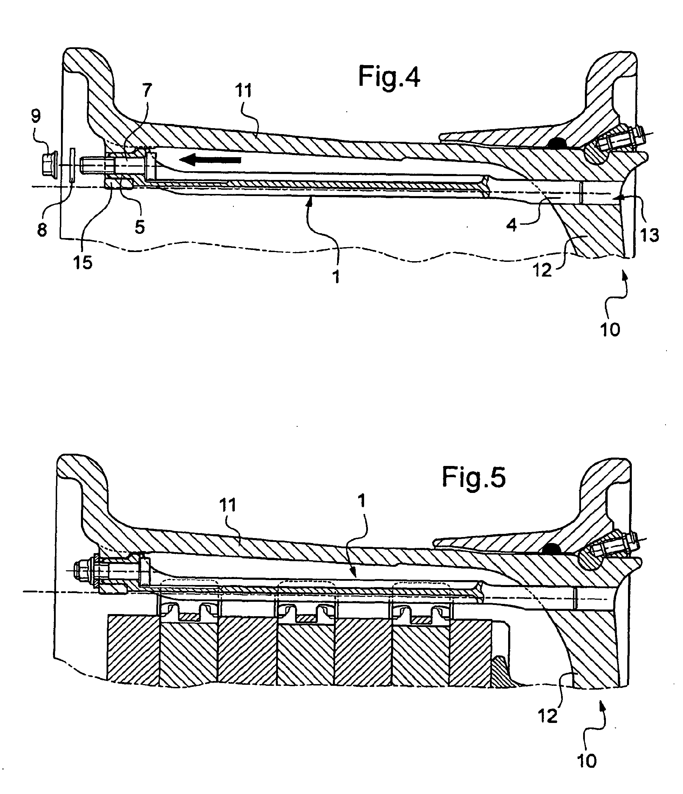

Comme illustré à la figure 2, le premier embout 4 de la barrette 1 est introduit dans le premier orifice 13. Sur cette figure, le décalage d entre les deux embouts est parfaitement visible. Puis, comme illustré à la figure 3, la barrette 1 est pivotée autour du premier embout 4 pour ramener le deuxième embout 5 (muni d'une vis 7) en regard du deuxième orifice 14. Puis, comme illustré à la figure 4, la barrette 1 est reculée de façon à faire pénétrer le deuxième embout 5 dans le deuxième orifice 14. Il reste alors à faire avancer la vis 7 pour qu'elle dépasse du deuxième embout 5, afin de mettre en place une rondelle 8 et un écrou 9.

Le deuxième embout 5 reprend ainsi les efforts de freinage, de sorte que la vis 7 ne sert qu'à maintenir la barrette 1 en position sur la roue. La vis 7 est donc bien plus petite, et donc plus légère que pour les barrettes connues dans lesquelles la vis de fixation (et de reprise d'effort) s'étend selon une direction radiale.

Enfin, la figure 5 illustre la roue en position sur un essieu d'atterrisseur. On distingue les disques du frein associé qui viennent prendre place dans l'espace interne de la roue entre le voile 12 et la jante 11. La barrette 1 s'étend dans les échancrures périphériques des disques rotor pour entraîner ceux-ci en rotation avec la roue.

L'invention n'est pas limitée à ce qui vient d'être décrit, mais englobe au contraire toute variante entrant dans le cadre défini par les revendications.

## Revendications

1. Barrette pour roue d'aéronef, comportant un corps (2) oblong prolongé de part et d'autre par deux embouts (4, 5) s'étendant parallèlement au corps et parallèlement entre eux, en étant décalés l'un par rapport à l'autre, lesdits embouts étant conformés pour pénétrer à glissement dans deux orifices (13, 14) parallèles décalés de la roue, l'un des embouts (4) s'étendant dans le prolongement du corps et étant conformé pour permettre une rotation de la barrette autour d'un axe dudit embout lorsque ledit embout est engagé dans l'orifice (13) correspondant, **caractérisé en ce que** l'autre des embouts (5) est creux et est adapté à recevoir une vis s'étendant selon un axe longitudinal de l'embout.

2. Roue d'aéronef spécialement adaptée à recevoir une barrette (1) selon la revendication 1, comportant une jante (11) soutenue par un voile (12), la roue comportant un premier orifice (13) ménagé dans le voile (12) pour recevoir l'un des embouts de la barrette, et un deuxième orifice (14), **caractérisé en ce que** le deuxième orifice (14) est parallèle au premier orifice (13) mais décalé par rapport à celui-ci, et **en ce que** le deuxième orifice (14) est ménagé dans une portion (15) de la roue qui s'étend en saillie d'une face interne de la jante (11).

## Patentansprüche

1. Leiste für ein Rad eines Luftfahrzeugs, umfassend einen länglichen Körper (2), der auf beiden Seiten durch zwei Ansatzstücke (4, 5) verlängert ist, die sich parallel zum Körper und parallel zueinander erstrecken, indem sie zueinander versetzt sind, wobei die besagten Ansatzstücke so ausgebildet sind, dass sie gleitend in zwei parallele, gegeneinander versetzte Öffnungen (13, 14) des Rades eindringen, und wobei eines der sich in Verlängerung des Körpers erstreckenden Ansatzstücke (4) so ausgebildet ist, dass es eine Rotation der Leiste um eine Achse des besagten Ansatzstückes ermöglicht, wenn das besagte Ansatzstück in die entsprechende Öffnung (13) eingreift, **dadurch gekennzeichnet, dass** das andere Ansatzstück (5) hohl ist und so adaptiert ist, dass es eine Schraube aufnimmt, die sich entlang einer Längsachse des Ansatzstückes erstreckt.

2. Rad für ein Luftfahrzeug, das speziell so adaptiert ist, dass es eine Leiste (1) nach Anspruch 1 aufnimmt, umfassend eine Felge (11), die von einer Radscheibe (12) gestützt ist, wobei das Rad eine erste Öffnung (13) umfasst, die in der Radscheibe (12) ausgebildet ist zur Aufnahme eines der Ansatzstücke der Leiste, und eine zweite Öffnung (14), **dadurch gekennzeichnet, dass** die zweite Öffnung (14) parallel zur ersten Öffnung (13), jedoch relativ zu dieser versetzt ist, und dadurch, dass die zweite Öffnung (14) in einem Abschnitt (15) des Rades ausgebildet ist, der von einer Innenfläche der Felge (11) absteht.

## Claims

1. A bar for an aircraft wheel, the bar comprising an oblong body (2) extended at each end by respective endpieces (4, 5) extending parallel to the body and parallel to each other, the endpieces being offset relative to each other, said endpieces being shaped to penetrate slidably into two parallel orifices (13, 14) that are offset, one of the endpieces (4) extended in line with the body and being shaped to enable the bar to turn about an axis of said endpiece when said endpiece extends in the corresponding orifice (13), **characterized in that** the other endpiece (5) is hollow and is adapted to receive a screw that extends along a longitudinal axis of the endpiece.

2. An aircraft wheel specially adapted to receive a bar (1) according to claim 1, the wheel comprising a rim (11) supported by a disk (12), the wheel a having a first orifice (13) formed in the disk to receive one of the endpieces of the bar, and a second orifice (14), **characterized in that** said second orifice is parallel to the first orifice (13) but offset relative thereto, and **in that** the second orifice (14) is formed in a portion (15) of the wheel that projects from an inside face of the rim (11).
